# EUROPÄISCHE PATENTSCHRIFT

(11) **EP 1 012 116 B1**
(45) Veröffentlichungstag und Bekanntmachung des Hinweises auf die Patenterteilung: **07.11.2001**
(21) Anmeldenummer: 98939635.3
(22) Anmeldetag: 14.07.1998
(51) Int. Cl.: C02F 1/32

(54) **EINRICHTUNG ZUM ENTKEIMEN VON WASSER, WELCHES EINE SANITÄREINRICHTUNG DURCHSTRÖMT**
DEVICE FOR DEGERMINATING WATER PASSING THROUGH A SANITARY DEVICE
DISPOSITIF PERMETTANT DE DEGERMER L'EAU QUI S'ECOULE PAR UN EQUIPEMENT SANITAIRE

(30) Priorität: 22.08.1997 DE 19736634
(43) Veröffentlichungstag der Anmeldung: 28.06.2000
(73) Patentinhaber: HANSA METALLWERKE AG, 70567 Stuttgart (DE)
(72) Erfinder: KUNKEL, Horst, D-70544 Stuttgart (DE)
(74) Vertreter: Ostertag, Ulrich, Dr.
(86) Internationale Anmeldenummer: EP9804358
(87) Internationale Veröffentlichungsnummer: WO9910280

(56) Entgegenhaltungen:
- DE-A- 3 924 350
- GB-A- 2 206 292
- US-A- 4 857 204
- US-A- 5 547 590

## Beschreibung

Die Erfindung betrifft eine Einrichtung zum Entkeimen von Wasser, welches eine Sanitäreinrichtung durchströmt, mit
a) einem Gehäuse, welches einen Einlaß und einen Auslaß für das Wasser aufweist;
b) einer UV-Lampe, die innerhalb des Gehäuses angeordnet und deren Strahlung auf das durchströmende Wasser und ggf. auf eine ebenfalls in dem Gehäuse untergebrachte Filtervorrichtung gerichtet ist;
c) einer Energieversorgungsschaltung für die UV-Lampe;
d) einer Einrichtung zur Erzeugung eines Ein- und Ausschaltsignales für die Energieversorgungsschaltung der UV-Lampe, die wirkungsmäßig mit einem in der Frischwasser-Zufuhrleitung liegenden, vom Benutzer betätigbaren, Ventil gekoppelt ist.

In den letzten Jahren sind die Gefahren, die von Mikroorganismen, insbesondere Bakterien, Amöben oder anderen Einzellern, verunreinigtem Wasser im Sanitärbereich ausgehen, zunehmend deutlicher geworden. Der Entkeimung von Wasser wird daher eine erhöhte Bedeutung beigemessen. In diesem Zusammenhang wurde von Versuchen berichtet, strömendes Wasser durch Bestrahlung mit UV-Licht zu entkeimen, dessen Wellenlänge geeignet ist, im Wasser mitgeführte Mikroorganismen abzutöten. Zur Verzögerung der Verweilzeit dieser Mikroorganismen im Bereich der UV-Lampe kann eine zusätzliche Filtervorrichtung eingesetzt werden.

Bei den aus den genannten Versuchen bekannten Einrichtungen wurde die UV-Lampe aktiviert, wenn der Wasserfluß in Gang gesetzt wird, beispielsweise durch einen mechanischen Schalter, der mit dem Betätigungselement des den Wasserstrom steuernden Ventiles mechanisch verbunden war. Diese Art, den Wunsch des Benutzers nach strömendem Wasser zu signalisieren, war jedoch verhältnismäßig unzuverlässig, insbesondere dann, wenn das vom Benutzer betätigbare Ventil nur sehr wenig geöffnet wurde.

DE-A-3 924 350 oder US-5 547 590 offenbaren Einrichtungen zum Entkeimen von wasser bei dessen ein Druckaufnehmer zur Regelung der Funktionsweise der Einrichtung verwendet wird.

Aufgabe der vorliegenden Erfindung ist es, eine Einrichtung zum Entkeimen von Wasser, welches eine Sanitäreinrichtung durchströmt, der eingangs genannten Art so auszugestalten, daß der Wunsch des Benutzers, Wasser zu entnehmen sowie diese Wasserentnahmen wieder zu beenden, zuverlässig angezeigt wird und elektronisch verarbeitet werden kann.

Diese Aufgabe wird erfindungsgemäß dadurch gelöst, daß stromauf von dem vom Benutzer betätigbaren Ventil in der Frischwasser-Zufuhrleitung ein Magnetventil angeordnet ist und daß zwischen dem Magnetventil und dem vom Benutzer betätigbaren Ventil ein Druckaufnehmer in der Frischwasser-zufuhrleitung liegt, dessen Signal als Ein- und Ausschaltsignal der Energieversorgungsschaltung für die UV-Lampe und das Magnetventil genutzt wird.

Erfindungsgemäß wird also nicht mehr eine mechanische Bewegung an dem vom Benutzer betätigbaren Ventil auf einen elektrischen Schalter übertragen. Vielmehr wird der Druck in dem Abschnitt der Frischwasser-Zufuhrleitung, der zwischen dem Magnetventil und dem vom Benutzer betätigbaren Ventil liegt, als "Sensor" für den Wunsch des Benutzers, Wasser zu entnehmen oder die Wasserentnahme zu beenden, verwertet: Ein Druckabfall in diesem Abschnitt der Frischwasser-Zufuhrleitung wird als Zeichen dafür gedeutet, daß das vom Benutzer betätigbare Ventil geöffnet ist und damit als Wunsch des Benutzers, Wasser zu zapfen. Sobald also ein derartiges Signal festgestellt wird, wird die UV-Lampe eingeschaltet und das zunächst geschlossene Magnetventil geöffnet Ein Wiederanstieg des Druckes in dem fraglichen Abschnitt der Frischwasser-Zufuhrleitung ist Ausdruck dafür, daß der Benutzer das von ihm betätigbare Ventil wieder geschlossen hat und daher kein weiteres Wasser mehr zapfen will. In diesem Falle kann - ggfs. mit zeitlicher Verzögerung - die UV-Lampe abgeschaltet und das Magnetventil geschlossen werden.

Die Verarbeitung des von dem Druckaufnehmer erzeugten Signales kann "direkt" in dem Sinne erfolgen, daß der tatsächliche Druckwert ermittelt und bei Unterschreiten eines Vergleichswertes die UV-Lampe aktiviert wird. Solange also der fragliche Vergleichswert unterschritten ist (und ggf. eine bestimmte Zeitverzögerung darüber hinaus) brennt die UV-Lampe. Beim Wiederanstieg des vom Druckaufnehmer gemessenen Druckwertes über den Vergleichswert hinaus (und ggf. mit einer gewissen Verzögerung) wird die UV-Lampe wieder abgeschaltet. Bei dieser Art der Signalverarbeitung genügt also ein einziges Durchlaufen des gemessenen Druckwertes durch den Vergleichswert, um eine Änderung des Schaltungszustandes der UV-Lampe zu bewirken.

Um zu verhindern, daß Druckstöße, wie sie in der Frischwasser-Zufuhrleitung von Gebäuden häufig auftreten, zu einer Fehlinterpretation der Steuerelektronik führen, kann die das Ausgangssignal des Druckaufnehmers verarbeitende Druckaufnehmerelektronik ein Integrationsglied enthalten, welche des Ausgangssignal des Druckaufnehmers über eine bestimmte Zeitspanne integriert, die länger als die typische Dauer von Druckstößen in der Frischwasser-Zufuhrleitung ist. Derartige zufällig auftretende Druckstöße, die im allgemeinen auf das Öffnen und Schließen von Armaturen an einer anderen Stelle im Gebäude zurückzuführen sind, können auf diese Weise "gemittelt" und unschädlich gemacht werden.

Eine empfindlichere elektronische Verarbeitung des vom Druckaufnehmer gelieferten Ausgangssignales gelingt dann, wenn eine Steuerelektronik vorhanden ist, welche das Magnetventil über eine Ventiltreiberschaltung zyklisch öffnet und schließt. Die Öffnungs- und Schließvorgänge brauchen dabei nicht vollständig durchgeführt zu werden; es genügt häufig, diese Vorgänge nur beginnen zu lassen und dann wieder umzukehren, um ein verwertbares Signal zu erhalten.

Die Frequenz dieses zyklischen Öffnens und Schließens sollte zwischen 0,1 und 10 Hz liegen.

Der Vorteil des zyklischen Öffnens und Schließens besteht darin, daß die Weiterverarbeitung des Ausgangssignales des Druckaufnehmers mit Wechselstromtechniken erfolgen kann. Durch die ständige Wiederholung des interessierenden Signales ist eine Detektion auch dann zuverlässig möglich, wenn sich die Einrichtung an ihrer Empfindlichkeitsgrenze befindet.

Besonders bevorzugt wird diejenige Ausgestaltung der Erfindung, bei welcher die Druckaufnehmerelektronik der Steuerelektronik ein differenziertes, die Änderung des Druckes am Druckaufnehmer bezeichnendes Signal zuführt, wobei die Steuerelektronik die Energieversorgungsschaltung für die UV-Lampe solange und ggf. eine vorbestimmte Zeitspanne darüber hinaus aktiviert, wie ihr ein für eine Druckänderung, insbesondere Druckabnahme, am Druckaufnehmer stehendes Signal zugeführt wird. Bei dieser Art der Signalverarbeitung wird also nicht mehr auf den Absolutwert des Druckes abgestellt, den der Druckaufnehmer mißt, sondern nur noch auf die Änderung, insbesondere Abnahme, dieses Druckes. Solang beim zyklischen Öffnen und Schließen des Magnetventiles vom Druckaufnehmer eine mit der gleichen Frequenz stattfindende Änderung des Druckes in dem Abschnitt der Frischwasser-Zufuhrleitung festgestellt wird, bedeutet dies, daß das vom Benutzer betätigbare Ventil offen ist, der Benutzer also Wasser zapfen will. Erst wenn das vom Benutzer betätigbare Ventil geschlossen ist, wird der in dem fraglichen Abschnitt der Frischwasser-Zufuhrleitung herrschende und vom Druckaufnehmer gemessene Druck zeitlich konstant. Dann kann - ggf. mit einer bestimmten Zeitverzögerung - die UV-Lampe abgeschaltet werden.

Das (zumindest angedeutete) zyklische Öffnen und Schließen des Magnetventiles kann ständig erfolgen. In diesem Falle wird der in dem interessierenden Abschnitt der Frischwasser-Zufuhrleitung herrschende Druck bei geschlossenem, vom Benutzer betätigbarem Ventil ständig "aufgefrischt"; Leckagen, insbesondere in dem vom Benutzer betätigbaren Ventil, führen dann zu keiner Fehlauslösung der UV-Lampe.

Alternativ ist es jedoch auch möglich, das Magnetventil nur in derjenigen Zeit, in welcher das vom Benutzer betätigbare Ventil geöffnet ist, zyklisch zu öffnen und zu schließen. Bei dieser Ausgestaltung dient also das zyklische Öffnen und Schließen des Magnetventiles nur dazu, das Schließen des vom Benutzer betätigbaren Ventiles besser erkennen zu können. Ein Vorteil bei der Detektion des Öffnens dieses Ventiles ist hier nicht gegeben. Andererseits ist der Energieverbrauch der Einrichtung in diesem Falle sehr viel geringer, da das Magnetventil nur während sehr viel kürzerer Zeitspannen bestromt werden muß; das Magnetventil wird außerdem geschont. Unerläßlich ist diese letztgenannte Ausgestaltung der Signalverarbeitung dann, wenn durch das Magnetventil zusätzlich der Wasserstrom geregelt werden soll, beispielsweise dann, wenn der Wasserstrom erst mit einer bestimmten zeitlichen Verzögerung nach dem Öffnen des vom Benutzer betätigbaren Ventiles einsetzen soll.

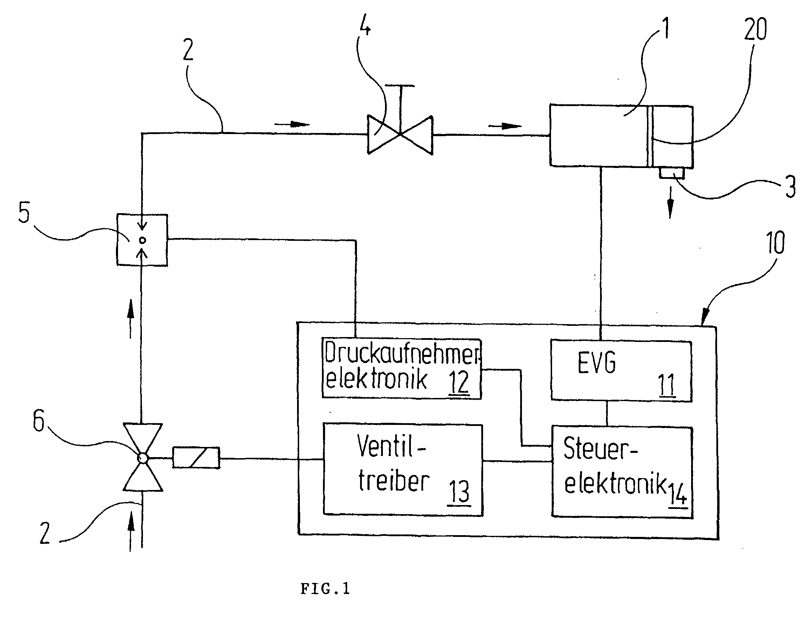

Ein Ausführungsbeispiel der Erfindung wird nachfolgend anhand der Zeichnung näher erläutert; die einzige Figur zeigt schematisch ein Blockschaltbild und die zugehörigen Hardware-Komponenten einer Einrichtung zur Entkeimung und Filtrierung von Wasser, welches eine sanitäre Auslaufarmatur durchströmt.

In der Zeichnung ist mit dem Bezugszeichen 1 schematisch eine sanitäre Auslaufarmatur gezeigt, die im dargestellten Ausführungsbeispiel als Wannenauslauf gedacht werden kann, die aber auch Teil einer vollständigen, das Ventil enthaltenden Sanitärarmatur, beispielsweise eines Einhebelmischers, sein kann. Statt des Wannenauslaufes 1 kann es sich auch um eine Brause oder dergleichen handeln.

Der Wannenauslauf 1 wird über eine Frischwasser-Zufuhrleitung 2 mit Wasser versorgt, in dem sich möglicherweise Mikroorganismen, wie Amöben, Bakterien oder ähnliche Einzeller, befinden. Zu deren Beseitigung sind innerhalb des Wannenauslaufes 1 eine UV-Lampe und eine Filtervorrichtung (nicht dargestellt) integriert. Die UV-Lampe bestrahlt das durchströmende Wasser sowie die Filtervorrichtung, und tötet hierdurch die Mikroorganismen ab, die vom Wasser mitgeführt und/oder von der Filtervorrichtung zurückgehalten werden. Aus der Auslauföffnung 3 des Wannenauslaufes 1 tritt daher weitestgehend keimfreies und filtriertes Wasser aus.

Stromauf von dem Wannenauslauf 1 ist in der Zeichnung ein vom Benutzer betätigbares Ventil 4 erkennbar, bei dem es sich entweder um ein mechanisch durch direkte Krafteinwirkung des Benutzers betätigtes Ventil oder auch um ein mittelbar berührungslos durch den Benutzer gesteuertes Magnetventil handeln kann. Noch weiter stromauf ist in die Frischwasser-Zufuhrleitung 2 ein Druckaufnehmer 5 eingefügt; diesem wird das Frischwasser von einem Magnetventil 6 zugeführt, welches das erste "Glied" in der Frischwasser-Zufuhrleitung 2 ist.

Mit dem Bezugszeichen 10 ist in der Zeichnung insgesamt die Schaltungsanordnung gekennzeichnet, welche zum Betrieb der oben geschilderten Hardware-Komponenten 1 bis 6 eingesetzt wird. Die Schaltungsanordnung 10 umfaßt eine Energieversorgungsschaltung 11 für die in dem Wannenauslauf 1 integrierte UV-Lampe, eine Druckaufnehmer-Elektronik 12, welche das vom Druckaufnehmer 5 gelieferte Drucksignal verarbeitet, eine Ventiltreiberschaltung 13, welche das Magnetventil 6 bestromt, sowie eine das Zusammenwirken der o.g. Teilkomponenten der Schaltungsanordnung 10 steuernde Steuerelektronik 14.

Die oben beschriebene Schaltungsanordnung arbeitet wie folgt:

Die dem vom Benutzer betätigten Ventil 4 innerhalb der Frischwasser-Zufuhrleitung 2 vorgelagerten Komponenten 5 und 6 dienen als Einrichtung zur Erzeugung eines Einschaltsignales in der folgenden Weise:

Als Ausgangssituation sei angenommen, daß das vom Benutzer betätigte Ventil 4 geschlossen ist, aus der Auslauföffnung 3 also kein Wasser ausfließt. Der in dem Leitungsstück zwischen dem vorgeschalteten Magnetventil 6 und dem benutzerbetätigten Ventil 4 eingesetzte Druckaufnehmer 5 mißt den vollen Systemdruck, der noch von dem vorausgegangenen Arbeitszyklus herrührt. Wird nunmehr durch Einwirkung des Benutzers das Ventil 4 geöffnet, fällt am Druckaufnehmer 5 der Druck stark ab. Die Druckaufnehmer-Elektronik 12 gibt ein entsprechendes Signal an die Steuerelektronik 14 ab, die den "Wunsch" des Benutzers erkennt, Wasser aus dem Wannenauslauf 1 zu zapfen. Sie aktiviert die Energieversorgungsschaltung 11 für die im Wannenauslauf 1 befindliche UV-Lampe, die jetzt gezündet wird, und ggfs. mit einer zeitlichen Verzögerung die Ventiltreiberschaltung 13. Diese bestromt das Magnetventil 6 so, daß es öffnet. Nunmehr fließt Frischwasser durch die Frischwasser-Zufuhrleitung 2, an dem Druckaufnehmer 5 vorbei durch das vom Benutzer bereits geöffnete Ventil 4 zum Wannenauslauf 1, wo es an der UV-Lampe vorbei, durch die Filtervorrichtung hindurch und so gereinigt aus der Auslauföffnung 3 des Wannenauslaufes 1 strömen kann.

Benötigt der Benutzer kein Wasser mehr, so schließt er (wiederum direkt oder mittelbar) das Ventil 4. Der Druckaufnehmer 5 fühlt den dadurch bedingten Druckanstieg.
Das entsprechende Signal wird von der Druckaufnehmer-Elektonik 12 an die Steuerelektronik 14 abgegeben. Diese schließt nun zum einen über ein entsprechendes an die Ventiltreiberschaltung 13 gegebenes Signal das Magnetventil 6 wieder und desaktiviert außerdem - ggf. mit einer gewissen Zeitverzögerung - die Energieversorgungsschaltung 11 für die im Wannenauslauf 1 befindliche UV-Lampe.

Um zu vermeiden, daß Druckstöße in der Frischwasser-Zufuhrleitung zu einem unerwünschten Ansprechen der Steuerelektronik führen, ist in der Druckaufnehmer-Elektronik 12 ein Integrationsglied enthalten, welches das vom Druckaufnehmer 5 erzeugte Meßsignal über eine gewisse Zeit integriert und somit kurzzeitige Druckstöße "glättet".

Die oben geschilderte Schaltungsanordnung kann auch "dynamisch" betrieben werden. Hierdurch läßt sich die Empfindlichkeit der Einrichtung zur Erzeugung eines Einschaltsignales noch steigern, insbesondere dann, wenn vom Benutzer am handbetätigten Ventil 4 nur kleine Öffnungsquerschnitte eingestellt werden.

Bei dieser "dynamischen" Betriebsweise wird durch die Steuerelektronik 14 das Magnetventil 6 über die Ventiltreiberschaltung 13 zyklisch zumindest andeutungsweise geöffnet und geschlossen. Die Frequenz dieses zyklischen Betriebes kann von einigen Hz bis zu etwa 0,1 Hz betragen. Es stehen heute Magnetventile zur Verfügung, bei denen ein derartiges zyklisches Öffnen und Schließen durch eine entsprechende Schließcharakteristik ohne Druckschläge oder sonstige Komforteinbußen erfolgen kann.

Die Funktionsweise entspricht im wesentlichen derjenigen, die oben für die "statische" Betriebsart geschildert wurde, mit folgenden Ausnahmen:

Befindet sich die Einrichtung im "Martezustand", ist also das handbetätigte Ventil 4 geschlossen, so wird durch das zyklische Öffnen des Magnetventiles 6 sichergestellt, daß in dem Abschnitt der Frischwasser-Zufuhrleitung 2, in welchem der Druckaufnehmer 5 liegt, der statische Druck aufrecht erhalten bleibt, auch wenn sich in diesem Leitungszweig bzw. dem handbetätigten Ventil 4 kleine Leckagen befinden. Der Druck am Druckaufnehmer 5 wird daher ständig wieder "aufgefrischt".

Bei der Erzeugung eines Einschaltsignales, also beim Öffnen des handbetätigten Ventils 4, wird durch das zyklische Ein- und Ausschalten des Magnetventiles 6 folgendes erreicht: Befindet sich die Schaltungsanordnung an ihrer Empfindlichkeitsgrenze, weil beispielsweise das handbetätigte Ventil 4 nur in sehr geringem Ausmaße geöffnet wird und demzufolge auch der Druckabfall am Druckaufnehmer 5 nur verhältnismäßig gering ist, so kann durch die Wiederholung der Druckänderung am Druckaufnehmer 5 eine höhere Zuverlässigkeit der Detektion erzielt werden. Darüber hinaus ist eine Empfindlichkeitssteigerung dadurch möglich, daß die Druckaufnehmer-Elektronik nicht mehr auf das absolute Drucksigal des Druckaufnehmers 5 anspricht sondern eine Differentiationsstufe enthält. Diese ermittelt also nicht mehr den absoluten Wert des Druckes in dem Abschnitt der Frischwasser-Zufuhrleitung zwischen dem Magnetventil 6 und dem handbetätigten Ventil 4 sondern die Druckänderung. Das entsprechende Signal kann elektronisch leicht weiterverarbeitet werden. Bei der Erzeugung eines Einschaltsignales für die Steuerelektronik 14 würde also z.B. der zyklisch auftretende Druckabfall am Drucksensor 5 als negatives Signal von der Druckaufnehmer-Elektronik 12 verarbeitet und der Steuerelektronik als "Einschaltsignal" zugeführt werden.

Das Schließen des handbetätigten Ventiles 4 wird in diesem Falle dadurch erfaßt, daß das zyklisch auftretende Druckabnahmesignal am Drucksensor 5 wegfällt, da bei geschlossenem handbetätigten Ventil 4 sich in dem Zweig der Frischwasser-Zufuhrleitung 2 zwischen Magnetventil 6 und handbetätigtem Ventil 4 in kurzer Zeit ein konstanter Druck, nämlich der Systemdruck, einstellt.

## Patentansprüche

1. Einrichtung zum Entkeimen von Wasser, welches eine Sanitäreinrichtung durchströmt, mit
a) einem Gehäuse, welches einen Einlaß und einen Auslaß für das Wasser aufweist;
b) einer UV-Lampe, die innerhalb des Gehäuses angeordnet und deren Strahlung auf das durchströmende Wasser und ggf. auf eine ebenfalls in dem Gehäuse untergebrachte Filtervorrichtung gerichtet ist;
c) einer Energieversorgungsschaltung für die UV-Lampe;
d) einer Einrichtung zur Erzeugung eines Ein- und Ausschaltsignales für die Energieversorgungsschaltung der UV-Lampe, die wirkungsmäßig mit einem in der Frischwasser-Zufuhrleitung liegenden, vom Benutzer betätigbaren, Ventil gekoppelt ist,
**dadurch gekennzeichnet, daß**
stromauf von dem vom Benutzer betätigbaren Ventil (4) in der Frischwasser-Zufuhrleitung (2) ein Magnetventil (6) angeordnet ist, und daß zwischen dem Magnetventil (6) und dem vom Benutzer betätigbaren Ventil (4) ein Druckaufnehmer (5) in der Frischwasser-Zufuhrleitung (2) liegt, dessen Signal als Ein- und Ausschaltsignal der Energieversorgungsschaltung (11) für die UV-Lampe und das Magnetventil (6) genutzt wird.

2. Einrichtung nach Anspruch 1, **dadurch gekennzeichnet, daß** die das Ausgangssignal des Druckaufnehmers (5) verarbeitende Druckaufnehmer-Elektronik (12) ein Integrationsglied enthält, welches das Ausgangssignal des Druckaufnehmers (5) über eine Zeitspanne integriert, die länger als die typische Dauer von Druckstößen in der Frischwasser-Zufuhrleitung (2) ist.

3. Einrichtung nach Anspruch 1 oder 2, **dadurch gekennzeichnet, daß** eine Steuerelektronik (14) vorhanden ist, welche das Magnetventil (6) über eine Ventiltreiberschaltung (13) zyklisch öffnet und schließt.

4. Einrichtung nach Anspruch 3, **dadurch gekennzeichnet, daß** die Frequenz des zyklischen Öffnens und Schließens zwischen 0,1 und 10 Hz liegt.

5. Einrichtung nach Anspruch 3 oder 4, **dadurch gekennzeichnet, daß** die Druckaufnehmerelektronik (12) der Steuerelektronik (14) ein differenziertes, die Änderung des Druckes am Druckaufnehmer (5) bezeichnendes Signal zuführt, wobei die Steuerelektronik (14) die Energieversorgungsschaltung (11) für die UV-Lampe solange und ggf. eine vorbestimmte Zeitspanne darüber hinaus aktiviert, wie ihr ein für eine Druckänderung, insbesondere Druckabnahme, am Druckaufnehmer (5) stehendes Signal zugeführt wird.

6. Einrichtung nach einem der Ansprüche 3 bis 5, **dadurch gekennzeichnet, daß** das Magnetventil (6) ständig zyklisch geöffnet und geschlossen wird.

7. Einrichtung nach einem der Ansprüche 3 bis 5, **dadurch gekennzeichnet, daß** das Magnetventil (6) nur in derjenigen Zeit, in welcher das vom Benutzer betätigbare Ventil (4) geöffnet ist, zyklisch geöffnet und geschlossen wird.

## Claims

1. Device for sterilising water flowing through a sanitary installation, having
a) a housing, which has an inlet and an outlet for the water;
b) a UV lamp, which is arranged inside the housing and the radiation of which is directed at the water flowing through and optionally at a filter device likewise accommodated in the housing;
c) a power supply circuit for the UV lamp;
d) a device for generating a switching-on and switching-off signal for the power supply circuit of the UV lamp, which is operatively coupled to a valve located in the fresh-water supply line and actuable by the user,
**characterised in that**
a solenoid valve (6) is arranged in the fresh-water supply line (2) upstream of the valve (4) actuable by the user, and **in that** a pressure sensor (5), the signal of which is utilised as the switching-on and switching-off signal of the power supply circuit (11) for the UV lamp and the solenoid valve (6), is located in the fresh-water supply line (2) between the solenoid valve (6) and the valve (4) actuable by the user.

2. Device according to Claim 1, **characterised in that** the pressure-sensor electronics (12), which process the output signal of the pressure sensor (5), include an integrating element which integrates the output signal of the pressure sensor (5) over a period of time which is longer than the typical duration of pressure surges in the fresh-water supply line (2).

3. Device according to Claim 1 or 2, **characterised in that** control electronics (14), which cyclically open and close the solenoid valve (6) via a valve driver circuit (13), are present.

4. Device according to Claim 3, **characterised in that** the frequency of the cyclical opening and closing is between 0.1 and 10 Hz.

5. Device according to Claim 3 or 4, **characterised in that** the pressure-sensor electronics (12) supply the control electronics (14) with a differentiated signal denoting the change in the pressure at the pressure sensor (5), the control electronics (14) activating the power supply circuit (11) for the UV lamp as long as they are supplied with a signal representing a pressure change, in particular pressure drop, at the pressure sensor (5), and optionally for a predetermined period of time beyond this.

6. Device according to one of Claims 3 to 5, **characterised in that** the solenoid valve (6) is continuously cyclically opened and closed.

7. Device according to one of Claims 3 to 5, **characterised in that** the solenoid valve (6) is cyclically opened and closed only at that time when the valve (4) actuable by the user is open.

## Revendications

1. Dispositif de dégermination de l'eau circulant dans un équipement sanitaire, avec
a) un boîtier, qui comporte une entrée et une sortie pour l'eau ;
b) une lampe à rayons ultraviolets, qui est disposée à l'intérieur du boîtier et dont le rayonnement est dirigé sur l'eau qui s'écoule et éventuellement sur un dispositif de filtration également logé dans le boîtier ;
c) un circuit d'alimentation en énergie pour la lampe à rayons ultraviolets ;
d) un dispositif pour générer un signal de marche et d'arrêt pour le circuit d'alimentation en énergie de la lampe à rayons ultraviolets, qui est activement couplé à une soupape disposée dans la conduite d'amenée d'eau fraîche et pouvant être actionnée par l'utilisateur ;
**caractérisé en ce qu'**une soupape magnétique (6) est disposée en amont de la soupape (4) pouvant être actionnée par l'utilisateur dans la conduite d'amenée d'eau fraîche (2), et qu'un capteur de pression (5) est disposé dans la conduite d'amenée d'eau fraîche (2) entre la soupape magnétique (6) et la soupape (4) pouvant être actionnée par l'utilisateur, dont le signal est utilisé comme signal de marche et d'arrêt du circuit d'alimentation en énergie (11) de la lampe à rayons ultraviolets et de la soupape magnétique (6).

2. Dispositif selon la revendication 1, **caractérisé en ce que** l'électronique du capteur de pression (12) traitant le signal de sortie du capteur de pression (5) comprend un élément d'intégration, qui intègre le signal de sortie du capteur de pression (5) sur une période supérieure à la durée typique des coups de bélier dans la conduite d'amenée d'eau fraîche (2).

3. Dispositif selon la revendication 1 ou 2, **caractérisé en ce qu'**un dispositif de commande électronique (14) est prévu, qui ouvre et ferme cycliquement la soupape magnétique (6) via un circuit d'excitation de la soupape (13).

4. Dispositif selon la revendication 3, **caractérisé en ce que** la fréquence d'ouverture et de fermeture cycliques est comprise entre 0,1 et 10 Hz.

5. Dispositif selon la revendication 3 ou 4, **caractérisé en ce que** l'électronique du capteur de pression (12) du dispositif de commande électronique (14) transmet un signal différencié indiquant la variation de pression au capteur de pression (5), le dispositif de commande électronique (14) activant en outre le circuit d'alimentation en énergie (11) de la lampe à rayons ultraviolets aussi longtemps que lui est transmis un signal indiquant une variation de la pression, en particulier une baisse de la pression, au capteur de pression (5), et éventuellement pendant une plage de temps prédéterminée.

6. Dispositif selon l'une des revendications 3 à 5, **caractérisé en ce que** la soupape magnétique (6) est constamment ouverte et fermée cycliquement.

7. Dispositif selon l'une des revendication 3 à 5, **caractérisé en ce que** la soupape magnétique (6) n'est ouverte et fermée cycliquement que pendant la durée d'ouverture de la soupape pouvant être actionnée par l'utilisateur (4).
